# EUROPÄISCHE PATENTSCHRIFT

(11) **EP 3 447 279 B1**
(45) Veröffentlichungstag und Bekanntmachung des Hinweises auf die Patenterteilung: **28.09.2022**
(21) Anmeldenummer: 17187408.4
(22) Anmeldetag: 23.08.2017
(51) Int. Cl.: F03D 1/00, F03D 80/00, F03D 13/10

(54) **MASCHINENHAUSVERKLEIDUNG FÜR EINE WINDENERGIEANLAGE**
MACHINE HOUSING CLADDING FOR A WIND ENERGY FACILITY
REVÊTEMENT DE LOGEMENT DE MACHINES POUR UNE ÉOLIENNE

(43) Veröffentlichungstag der Anmeldung: 27.02.2019
(73) Patentinhaber: Nordex Energy SE & Co. KG, 22419 Hamburg (DE)
(72) Erfinder: Schaale, Thomas, 18055 Rostock (DE)
(74) Vertreter: Grünbaum, Annekathrin

(56) Entgegenhaltungen:
- CN-U- 202 073 718
- DE-A1-102014 206 703
- KR-A- 20140 035 606
- US-A1- 2011 076 140
- US-A1- 2011 101 699
- US-A1- 2011 142 616

## Beschreibung

Die vorliegende Erfindung betrifft die Maschinenhausverkleidung (Gondelverkleidung) einer Windenergieanlage.

Eine Windenergieanlage besteht üblicherweise aus einem Turm und einer um die Längsachse des Turms drehbar auf dem Turmkopf gelagerten Gondel. Das Maschinenhaus (Gondel) umfasst eine Tragstruktur sowie eine nichttragende Maschinenhausverkleidung mit einem Tragwerk. Das Tragwerk besteht in der Regel aus Streben, Profilen und/oder Pfosten. Die Gondel trägt den Rotor mit einer Rotornabe und mindestens einem Rotorblatt sowie einen Generator der die von dem Rotor aus dem Wind entnommene Energie in elektrische Energie umwandelt. Die Rotornabe kann optional eine Rotornabenverkleidung (Spinner) aufweisen, welche dem Schutz vor Witterungseinflüssen dient.

Die Bauteile einer Maschinenhausverkleidung bestehen zumeist aus faserverstärkten Kunststoffen (beispielsweise GFK oder CFK), die lokal durch einlaminierte Schaumkerne weiter ausgesteift werden. Um eine hohe Biegesteifigkeit in Verkleidungsteilen wirtschaftlich zu erzeugen, werden diese standardmäßig als Sandwichlaminate ausgeführt, d.h. zwischen zwei Schichten GFK/CFK wird eine schwache, aber dicke Mittelschicht eingebracht. Durch den vergrößerten Abstand der zwei Schichten zueinander erhöht sich die Biegesteifigkeit der Sandwichlaminate. Da diese Verkleidungsteile an ein dahinter liegendes Tragwerk angebunden werden müssen, meist punktförmig, werden lokal sehr große Kräfte in die Verkleidungsteile eingeleitet. Die Mittelschicht kann allerdings diese Kräfte nicht aufnehmen, da diese primär nur die Biegesteifigkeit erhöhen soll. Dieses Problem wird dadurch behoben, dass "bessere" bzw. höher feste Materialien (teurere Materialien) lokal eingebracht werden. So erfolgt die Anbindung an ein dahinter liegendes Tragwerk meist mit ebenfalls einlaminierten Metallinserts. Diese Metallinserts sind teils aufwendig zu positionieren.

In der Veröffentlichung US 20150152881 A1 werden GFK-Sandwichbauteile an Metallprofilen durchgehend verschraubt, so dass die Schraubenköpfe von außen sichtbar sind. Mehrere GFK-Bauteile werden zusammengeschraubt, um eine modulare Verlängerung der Gondel zu ermöglichen. Die aufgeschraubten Profile werden zusätzlich mit einem Paneel verbunden. Die Paneele werden vorrangig in Rotorachsenrichtung verschraubt.

Das Patent EP 2304231 B1 betrifft ein Gehäuse für die Gondel einer Windenergieanlage mit einer Tragstruktur, an welcher selbsttragende Verkleidungssegmente festgelegt sind. Die Verkleidungssegmente weisen jeweils einen versteifenden Rahmen auf, auf welchen ein mit dem Rahmen fest verbundenes Schalenelement flächig aufgesetzt ist, wobei der Rahmen mit der Tragstruktur verbunden ist. Die Verkleidungssegmente nehmen dimensionierende Lasten aus Wind und Verkehr auf, welche über eine gering gehaltene Anzahl von Verbindungspunkten an die Tragstruktur übertragen werden.

Für die Herstellung von Verkleidungsbauteilen setzt sich mehr und mehr das Harz-Infusionsverfahren durch, da es umweltschonender und materialsparender ist. Dieses Verfahren verlangt jedoch, dass die eingesetzten Materialien in einem Verkleidungsteil keine Hohlräume aufweisen, da diese im Herstellungsprozess komplett mit Harz gefüllt werden. Dies bewirkt einen sehr hohen Materialeinsatz und kann darüber hinaus auch zu Schäden führen (Überhitzen beim Aushärten der Harzsysteme).

US 2011/076140 A1 offenbart ein Gehäuse für die Gondel einer Windenergieanlage mit einer Tragstruktur und an dieser Tragstruktur befestigten Verkleidungselementen. Die Verkleidungselemente sind selbsttragend mit einem Rahmen aufgebaut, wobei der Rahmen in ein Schalenelement einlaminiert ist, um das selbsttragende Verkleidungselement zu bilden.

US 2011/142616 A1 beschreibt eine Gondel für eine Windkraftanlage mit einer Vielzahl von Wänden die miteinander verbunden sind. Die einzelnen Wände bestehen aus mehreren Segmenten, welche über Flansche miteinander verbunden sind. Die verschiedenen Wände sind miteinander über Längsstützbalken verbunden, indem jeweils zwei angrenzende Wände auf diesen Längsstützbalken mittels Schrauben befestigt sind und so die Gondelverkleidung bilden.

KR 20140035606 A zeigt ein Verkleidungsteil einer Windenergieanlage, welche geeignet scheint als Wärmetauscher zu dienen. Elemente auf der Innenseite des Verkleidungsteils dienen als Leitung für den Transport eines Wärmemediums. Dazu müssen die Elemente zum Verkleidungsteil hin dichtend versiegelt sein und sie müssen untereinander in Verbindung stehen, damit ein Wärmemedium durchgeleitet werden kann.

DE 102014206703 A1 zeigt eine Gondel einer Windenergieanlage, welche eine eiförmige Gondelverkleidung aufweist, die aus einzelnen Segmenten zusammengesetzt ist. Nebeneinanderliegende Verkleidungssegmente bzw. Schalensegmente werden über eine Schiene mit einer Dichtlippennut mit darin eingesetzter Dichtlippe verbunden.

US 2011/101699 A1 offenbart eine Rahmenkonstruktion, die zur Montage auf einem Windturbinenturm konfiguriert ist. Die Rahmenkonstruktion hat seitliche Stützelemente und obere Stützelemente und ist so konfiguriert, dass mindestens eine Komponente des Antriebsstrangs an den oberen Stützelementen innerhalb der Rahmenkonstruktion aufgehängt ist. Die Gondelverkleidung wird an der Rahmenkonstruktion angebracht. Die Gondelverkleidung wird aus einer Vielzahl von vorgeformten Paneelen gebildet, welche modular aufgebaut sein können. Die einzelnen Paneele werden mit herkömmlichen Mitteln an der Rahmenkonstruktion verschraubt. Verstärkungsprofile verstärken die Rahmenkonstruktion.

CN 202073718 U zeigt eine Verkleidung für eine Gondel einer Windkraftanlage. Die Verkleidung besteht aus einer Vielzahl von geteilten Abschnitten. Jeder der geteilten Abschnitte weist eine entsprechende Größe auf, um in einen Standardbehälter für den Transport, wie beispielsweise einen Standard-LKW oder einen Standard-Container, zu passen. Vor Ort wird die Gondel zusammengesetzt, wobei die einzelnen Teile miteinander verbunden werden, um die Verkleidung der Gondel zu bilden.

### Darstellung der Erfindung

Aufgabe der Erfindung ist es, die Anbringung von Bauteilen der Maschinenhausverkleidung, insbesondere für dünne Verkleidungsteile, auch in Sandwich-Bauweise, zu vereinfachen. Dabei soll auf zusätzliche Versteifungselemente (Stringer) innerhalb der Verkleidungsteile weitgehend verzichtet werden.

Die Lösung der Aufgabe erfolgt durch die Merkmale des Hauptanspruchs. Ausgestaltungen werden in den Unteransprüchen beschrieben.

Die Lösung besteht in der Idee, an die Teile der Maschinenhausverkleidung über die gesamte Länge Metallprofile anzuschrauben (Differentialbauweise). Mit Hilfe der an der Innenseite eines Verkleidungsteiles angeordneten Metallprofile wird dieses in Längs-und Querrichtung verstärkt.

Die erfindungsgemäße Maschinenhausverkleidung ist in Anspruch 1 definiert.

Die Verstärkungsprofile sind mit den Verkleidungsteilen durch Verbindungstechnologien, vorzugsweise durch Kleben, Nieten oder Verschrauben, verbunden.

Eine Windenergieanlage mit einem Turm, einer Gondel mit einem Rotor und einer Rotornabe, einer Rotornabenverkleidung hat eine oben beschriebene Maschinenhausverkleidung.

Die Vorteile gegenüber bestehenden Konzepten und Lösungen für Maschinenhausverkleidungen bestehen darin, durch die neu gewonnene geometrische Steifigkeit erhebliche Materialersparnisse zu erzielen. Die erfindungsgemäßen Teile verändern ihre geometrische Form unter Belastung nicht.

Die Vorteile der Erfindung beruhen ebenso darauf, dass die GFK-Bauteile selbst einfacher herzustellen sind. Es müssen keine zusätzlichen Metallinserts positioniert werden. Dennoch wird durch die erfindungsgemäße Lösung eine enorme Biegesteifigkeit in den GFK-Bauteilen erzeugt.

Dies bringt den weiteren Vorteil, dass die Positionen der Pfosten eines Tragwerks variabel gestaltet werden können. Hierfür würden sich nur die Positionen der Bohrungen innerhalb der Metallprofile ändern, die GFK-Bauteile bleiben an sich unverändert. Auch eine Neupositionierung der Metallprofile innerhalb der GFK-Bauteile ist analog einfach umzusetzen, ohne dass Positioniervorrichtungen oder Werkzeugformen angepasst werden müssen.

### Ausführung der Erfindung

Die Erfindung wird anhand eines Ausführungsbeispiels näher erläutert. Hierzu zeigen
- Figur 1: Maschinenhausverkleidung für eine Windenergieanlage
- Figur 2: verschiedene Hohlprofile zur Verstärkung von Verkleidungsteilen,
- Figur3: ein Verkleidungsteil einer Maschinenhausverkleidung mit drei Verstärkungsprofilen,
- Figur 4: Anbindung eines Verkleidungsteils an ein Tragwerk.

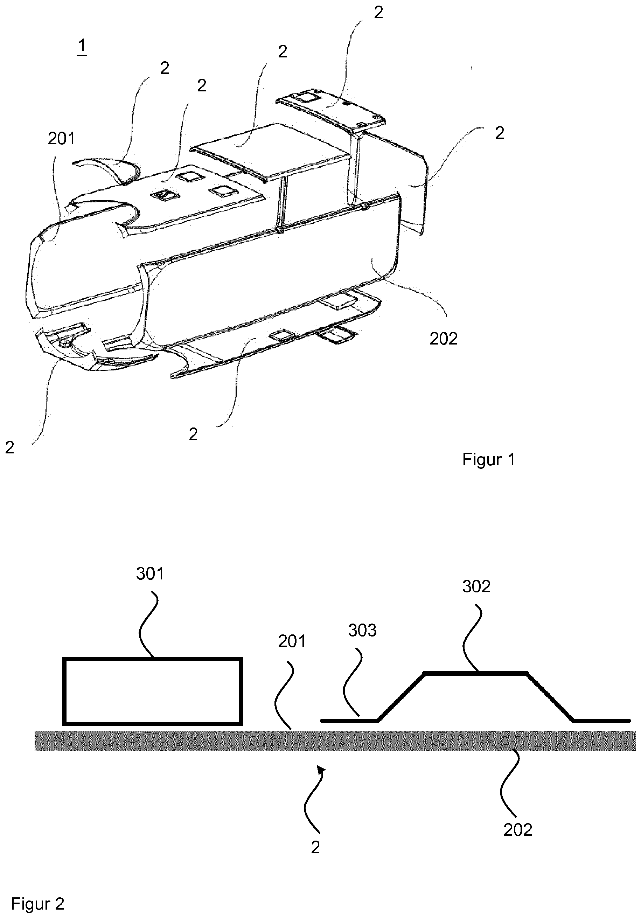

Figur 1 zeigt eine Maschinenhausverkleidung 1 für eine Windenergieanlage, die einen Körper mit einer annähernd quaderförmigen Form aufweist. Der annähernd quaderförmige Körper besteht aus mehreren Verkleidungsteilen 2 mit jeweils einer Innen- 201 und einer Außenseite 202. Die großflächigen Verkleidungsteile 2 sind in der Regel rechteckig und als dünnwandiges Flächenelement ausgebildet und bestehen vorzugsweise aus faserverstärkten Kunststoffen (beispielsweise GFK oder CFK), wobei diese, wie üblich, als Sandwichaufbau mit Kern oder Volllaminat aufgebaut sein können.

Figur 2 zeigt verschiedene Verstärkungsprofile 3 in einer skizzenhaften Darstellung, welche die Verkleidungsteile 2 verstärken können. Erfindungsgemäß erfolgt die Verstärkung der dünnwandigen Verkleidungsteile 2 auf ihrer Innenseite 201 durch Verstärkungsprofile 3, die als längliche Hohlprofile ausgebildet sind. Die Verstärkungsprofile 3 werden mit den Verkleidungsteilen 2 der Maschinenhausverkleidung 1 in Längs- und/oder Querrichtung zur Rotorachse verbunden. Dies kann durch bekannte Verbindungstechnologien wie Kleben, Nieten, Verschrauben u.a. erfolgen (Differentialbauweise). Für das Ausführungsbeispiel werden Metallprofile verwendet. Das erste Verstärkungsprofil 301 ist ein mehrfach gekantetes Blech, welches längsseitig geschlossen ist. Es hat einen rechteckigen Querschnitt. Das zweite Verstärkungsprofil 302 ist ein offenes, mehrfach gekantetes Blech, welches in seinem Querschnitt trapezförmig ausgeführt ist und für die Verbindung mit dem Verkleidungsteil 2 zwei angeformte Laschen 303 aufweist.

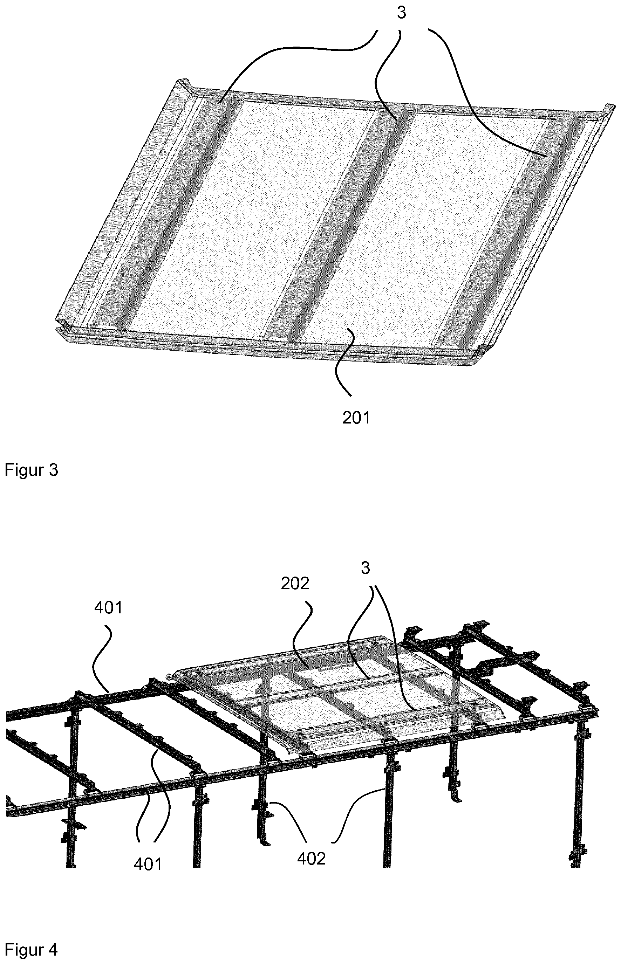

Figur 3 zeigt ein Verkleidungsteil 2 einer Maschinenhausverkleidung 1, welches mit drei Verstärkungsprofilen 3 verbunden ist. Ein einzelnes Verkleidungsteil 2 ist in der Regel rechteckig und als Flächenelement ausgebildet. Die Verstärkungsprofile 3 sind in Längsrichtung auf dem Verkleidungsteil 2 befestigt.

In Figur 4 ist ein Tragwerk 4 mit dem erfindungsgemäßen Verkleidungsteil 2 in einem Schattenriss zu sehen. Das Tragwerk 4 weist einen Rahmen aus Metallprofilen 401 mit Quer- und Längsstreben sowie seitliche Pfosten 402 auf. Das Tragwerk 4 ist in seiner Größe der jeweiligen Größe der Windenergieanlage angepasst. Es dient unter anderem der Aufnahme von Verkleidungsteilen 2. Die Verstärkungsprofile 3 aus Metall werden zur Anbindung der Verkleidungsteile 2 an das dahinter liegende Tragwerk 4 genutzt. Bei einem fertig gestellten Maschinenhaus 1 ist das Tragwerk 4 vollständig mit den Verkleidungsteilen 2 umhüllt.

Nach Herstellung der Verkleidungsteile 2 werden die Endkanten wie üblich beschnitten und entsprechende Löcher für die Verstärkungsprofile 3 gebohrt. Dabei müssen die Verstärkungsprofile 3 nicht über die gesamte Länge an die Verkleidungsteile 2 geschraubt werden. Die Anbindung der einzelnen Verkleidungsteile 2 des Maschinenhauses an das Tragwerk 4 erfolgt durch innenliegende Punktanbindungen über eine bestimmte Länge. Denkbar ist z.B., dass nur eine Schraube am Anfang und am Ende der Verstärkungsprofile 3 notwendig wird, vor allem für ihre Positionierung. Dazwischen können die Verstärkungsprofile 3 aufgeklebt werden oder mittels Hook & Loop-Verbindung (ähnlich einem Klettverschluss) gefügt werden.

Da es sich bei der vorhergehenden, detailliert beschriebenen Maschinenhausverkleidung 1 um ein Ausführungsbeispiel handelt, kann es in üblicher Weise vom Fachmann in einem weiten Umfang modifiziert werden, ohne den Bereich der Erfindung zu verlassen, wobei die Erfindung in den beigefügten Ansprüchen definiert ist. Weiter schließt die Verwendung der unbestimmten Artikel "ein" bzw. "eine" nicht aus, dass die betreffenden Merkmale auch mehrfach vorhanden sein können.

## Patentansprüche

1. Maschinenhausverkleidung (1) für eine Windenergieanlage, umfassend einen Körper mit einer annähernd quaderförmigen Form, wobei der annähernd quaderförmige Körper aus mehreren Verkleidungsteilen (2), die eine Innenseite (201) und eine Außenseite (202) aufweisen, zusammengesetzt ist, wobei die Verkleidungsteile (2) rechteckig und als dünnwandiges Flächenelement ausgebildet sind, und umfassend ein Tragwerk (4), welches einen Rahmen aus Metallprofilen (401) mit Quer- und Längsstreben und aus seitlichen Pfosten (402) aufweist, mit welchem Tragwerk (4) die Verkleidungsteile (2) verbunden sind, wobei wenigstens zwei Verstärkungsprofile (3) in Längs- und/oder Querrichtung zur Rotorachse auf der Innenseite (201) der Verkleidungsteile (2) angeordnet und mit diesen verbunden sind, und dass die Verkleidungsteile (2) mittels der Verstärkungsprofile (3) an das Tragwerk (4) angebunden sind, wobei die Verstärkungsprofile (3) als längliche Hohlprofile ausgebildet sind,
**dadurch gekennzeichnet, dass** die Hohlprofile aus einem mehrfach gekanteten Blech, welches längsseitig geschlossen ist, bestehen, oder aus einem offenen, mehrfach gekanteten Blech bestehen und einen offenen trapezförmigen Querschnitt aufweisen, wobei die Verstärkungsprofile (3) mit dem offenen trapezförmigen Querschnitt an ihren Längsseiten jeweils eine angeformte Lasche (303) für eine Verbindung mit dem Verkleidungsteil (2) aufweisen.

2. Maschinenhausverkleidung (1) nach Anspruch 1, **gekennzeichnet dadurch, dass** die als längliche Hohlprofile ausgebildeten Verstärkungsprofile (3), deren Hohlprofil aus einem mehrfach gekanteten Blech besteht, welches längsseitig geschlossen ist, einen rechteckigen Querschnitt aufweisen.

3. Maschinenhausverkleidung (1) nach einem der vorhergehenden Ansprüche 1 bis 2, **gekennzeichnet dadurch, dass** die Verstärkungsprofile (3) mit den Verkleidungsteilen (2) durch Kleben, Nieten oder Verschrauben verbunden sind.

## Claims

1. Nacelle cover (1) for a wind turbine, comprising a body with an approximately cuboid shape, wherein the approximately cuboid body is composed of a plurality of cover parts (2) which have an inner side (201) and an outer side (202), wherein the cover parts (2) are rectangular and in the form of a thin-walled panel element, and comprising a supporting structure (4) which has a frame composed of metal profiles (401) having transverse and longitudinal struts and of lateral posts (402), to which supporting structure (4) the cover parts (2) are attached, wherein at least two reinforcing profiles (3) are arranged, in a longitudinal and/or transverse direction with respect to the rotor axis, on the inner side (201) of the cover parts (2) and are connected thereto,
and in that the cover parts (2) are attached to the supporting structure (4) by means of the reinforcing profiles (3),
wherein the reinforcing profiles (3) are in the form of elongate hollow profiles,
**characterized in that** the hollow profiles consist of a multiply angled metal sheet which is closed on the longitudinal side, or consist of an open, multiply angled metal sheet and have an open trapezoid cross section, wherein the reinforcing profiles (3) with the open trapezoid cross section each have, on their longitudinal sides, an integrally formed tab (303) for connection to the cover part (2).

2. Nacelle cover (1) according to Claim 1, **characterized in that** the reinforcing profiles (3) in the form of elongate hollow profiles, the hollow profile of which consists of a multiply angled metal sheet which is closed on the longitudinal side, have a rectangular cross section.

3. Nacelle cover (1) according to one of the preceding Claims 1 to 2, **characterized in that** the reinforcing profiles (3) are connected to the cover parts (2) by adhesive bonding, riveting or screw-fastening.

## Revendications

1. Habillage de nacelle (1) pour une éolienne, comprenant un corps ayant une forme approximativement parallélépipédique, le corps approximativement parallélépipédique étant composé de plusieurs parties d'habillage (2), qui présentent un côté intérieur (201) et un côté extérieur (202), les parties d'habillage (2) étant rectangulaires et configurées sous forme d'élément plat à paroi mince, et comprenant une structure porteuse (4), qui présente un cadre de profilés métalliques (401) ayant des entretoises transversales et longitudinales et de montants latéraux (402), à laquelle structure porteuse (4) les éléments d'habillage (2) sont reliés, au moins deux profilés de renforcement (3) étant agencés dans la direction longitudinale et/ou transversale par rapport à l'axe de rotor sur le côté intérieur (201) des éléments d'habillage (2) et étant reliés à ceux-ci, et en ce que les éléments d'habillage (2) sont reliés à la structure porteuse (4) au moyen des profilés de renforcement (3), les profilés de renforcement (3) étant configurés sous forme de profilés creux allongés, **caractérisé en ce que** les profilés creux sont constitués d'une tôle pliée plusieurs fois, qui est fermée sur le côté longitudinal, ou sont constitués d'une tôle ouverte, pliée plusieurs fois, et présentent une section transversale trapézoïdale ouverte, les profilés de renforcement (3) ayant la section transversale trapézoïdale ouverte présentant sur leurs côtés longitudinaux respectivement une patte formée (303) pour une liaison avec la partie d'habillage (2).

2. Habillage de nacelle (1) selon la revendication 1, **caractérisé en ce que** les profilés de renforcement (3) configurés sous forme de profilés creux allongés, dont le profilé creux est constitué d'une tôle pliée plusieurs fois, qui est fermée sur le côté longitudinal, présentent une section transversale rectangulaire.

3. Habillage de nacelle (1) selon l'une quelconque des revendications 1 à 2 précédentes, **caractérisé en ce que** les profilés de renforcement (3) sont reliés aux parties de l'habillage (2) par collage, rivetage ou vissage.
